# EUROPEAN PATENT APPLICATION

(11) **EP 2 903 346 A1**
(43) Date of publication of application: **05.08.2015**
(21) Application number: 13843007.9
(22) Date of filing: 29.09.2013
(51) Int. Cl.: H04W 36/30

(54) **SWITCHING METHOD, SYSTEM AND DEVICE FOR COMMUNICATION PATHS**

(30) Priority: 29.09.2012 CN 201210379488
(71) Applicant: ZTE Corporation, Shenzhen, Guangdong 518057 (CN)
(72) Inventor: LIANG, Shuang, Shenzhen Guangdong 518057 (CN); ZONG, Zaifeng, Shenzhen Guangdong 518057 (CN); CHEN, Shu, Shenzhen Guangdong 518057 (CN)
(74) Representative: Brunazzi, Stefano
(86) International application number: PCT/CN2013/084646
(87) International publication number: WO 2014/048397

(57) **Abstract**

Disclosed are a method, system and device for switching a communication path. The method comprises: an MME receives a request message, wherein the request message is used for requesting for a communication in a D2D path; and the MME sends at least one bearer resource processing request message to a GW, wherein the bearer resource processing request message is used for notifying that a data path on a network side is switched from a CN path to the D2D path to be transmitted. The step that the MME receives the request message may comprise: the MME receives the request message from a eNodeB; or, the MME receives at least one bearer processing request from at least one of the two pieces of UE which have performed a D2D communication through the eNodeB. Through the present invention, the problem that the continuity of a data service cannot be guaranteed during path switching in the related art is solved, so that the continuity of the data service is guaranteed during path switching, and the path switching quality and the service experience of the user are improved.

## Description

### Technical Field

The present invention relates to the field of communications, and in particular to a method, a system and a device for switching a communication path.

### Background

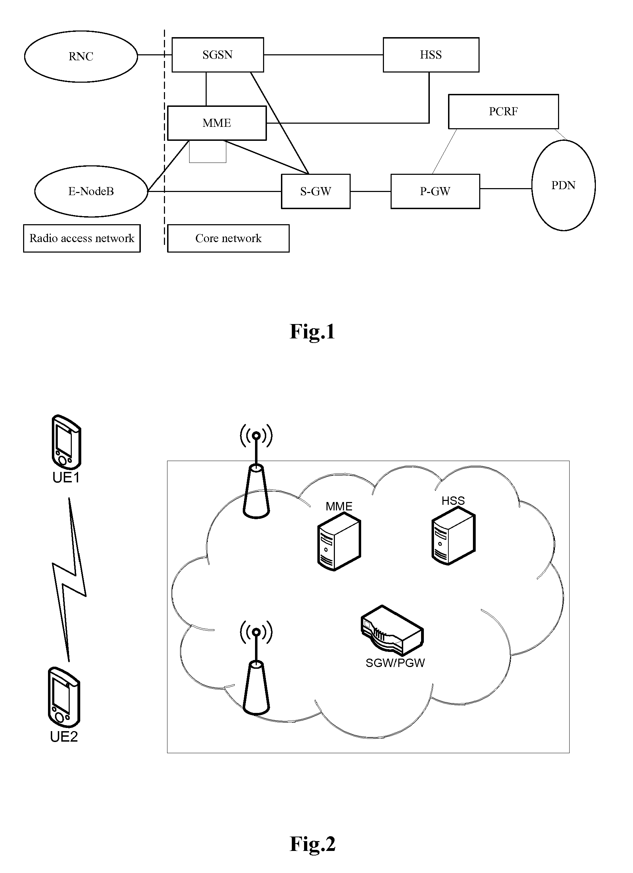

In order to keep the 3rd generation mobile communication system competitive in the field of communications, a mobile communication service which is higher in speed, lower in time delay and more personalized is provided to a user. Meanwhile, in order to reduce the operation cost of an operator, the 3rd Generation Partnership Project (3GPP) standard working group is committed to the research of an Evolved Packet System (EPS). Fig. 1 is a diagram showing the structure of an EPS according to the related arts. As shown in Fig. 1, the whole EPS includes a radio access network and a Core Network (CN). The radio access network consists of an Evolved NodeB (eNB) and a 3G Radio Network Control (RNC), is mainly responsible for sending and receiving a radio signal, and is connected to a terminal through an air interface to manage the radio resources, resource scheduling and access control of the air interface.

The core network includes a Home Subscriber Server (HSS), a Mobility Management Entity (MME), a Serving General Packet Radio Service (GPRS) Support Node (SGSN), a Policy and Charging Rule Function (PCRF), a Serving Gateway (S-GW), a Packet Data Network (PDN) Gateway (P-GW) and a PDN. The function of each component is described below.

The HSS contains all the functions of a Home Location Register (HLR), is a permanent storage location of user subscription data and is located in a home network subscribed by a user.

The MME is a storage location of user subscription data in the current network, and is responsible for the non-access layer signalling management from a terminal to a network, the security verification of the terminal, the mobility management of the terminal, the tracking and paging management in an idle mode of a user and bearer management.

The SGSN is a service support point for a GERAN and UTRAN user to access the core network, and is functionally similar to the MME to be responsible for the location updating, paging management, bearer management and the like for the user.

The S-GW is a gateway from the core network to a radio system, and is responsible for bearing a user plane from the terminal to the core network, caching data in an idle mode of the terminal, initiating a service request at a network side, legally monitoring and routing and forwarding packet data. The S-GW is responsible for counting the radio network use condition of a piece of User Equipment (UE), generating a radio network use bill for the terminal and transmitting it to a charging gateway.

The P-GW is a gateway for an evolved system and a packet data network outside the system, is connected to an internet and a packet data network, and is responsible for Internet Protocol (IP) address allocation, charging, packet filtering, policy control and the like of the terminal.

The GGSN supports the edge routing function of a GPRS network, namely, the GGSN is responsible for routing and forwarding the data of the GPRS network and guarantees the integrity of GPRS network data through a firewall and a filtering function. The GGSN further has a charging function.

The PGW contains all the functions of the GGSN, namely, the GGSN can be embedded in the PGW as a sub-function of the PGW. Therefore, the SGSN can be connected with the PGW directly through a Gn/Gp interface.

The PDN is an IP service network of the operator and provides the user with an IP service through the core network of the operator.

The PCRF is a server in the evolved system, which is responsible for providing charging control, online credit control, threshold control, Quality of Service (QoS) policy rule.

When two pieces of UE communicate with each other through an EPS network, they need to establish a bearer with the EPS. In consideration of the fast development of the intelligent terminal and various mobile internet services, many services want to discover an adjacent service for communication, therefore, a Device to Device (D2D) service arises.

Fig. 2 is a diagram showing the communication of a terminal supporting a D2D function according to the related arts. As shown in Fig. 2, the core network includes an MME, an SGW, a PGW and the like; when two terminals (such as UE1 and UE2) are close to each other, they can communicate with each other directly, and a data path connected by them cannot return to the core network, so that less data routing detours and the workload of network data is reduced. Therefore, many operators pay attention to this. However, two terminals which carry out a D2D communication have certain requirements on the communication distance. When this condition is not met, it is necessary to detour to the CN for communication. However, in this process, the data service cannot be guaranteed to be continuous enough, so that the service experience of the user may be affected.

At present, there is still no effective solution to solve the problem that the continuity of the data service cannot be guaranteed during path switching in the related arts.

### Summary

For the problem that the continuity of a data service cannot be guaranteed during path switching in the related arts, the present invention provides a method, a system and a device for switching a communication path, in order to at least solve the problem.

According to one aspect, an embodiment of the present invention provides a method for switching a communication path, including: an MME receives a request message, wherein the request message is used for requesting for a communication in a D2D path; and the MME sends a bearer resource processing request message to a GW, wherein the bearer resource processing request message is used for notifying that a data path on a network side for transmitting data is switched from a CN path to the D2D path. The step that the MME receives the request message may include: the MME receives the request message from an eNodeB; or, the MME receives a bearer processing request from at least one of the two pieces of UE, which have performed a D2D communication, through the eNodeB.

Before the MME receives the request message from the eNodeB, the method may further include: the eNodeB receives a verification request from the UE, wherein the verification request carries an identifier of the UE; and the eNodeB associates contexts of the two pieces of UE according to their context information stored locally, and verify them according to the associated contexts.

Before the MME receives the request message from the eNodeB, the method may further include: the eNodeB receives the verification request from the UE, wherein the verification request carries the identifier of the UE; the MME receives a verification request message from the eNodeB, wherein the verification request message carries the identifier of the UE; the MME judges whether to allow the two pieces of UE to communicate with each other according to a local policy and/or the subscription information of the UE; and if the result is that the communication between the two pieces of UE is allowed, the MME sends a verification request acknowledgement message to the eNodeB, wherein the verification request acknowledgement message is used for indicating that the communication between the two pieces of UE is allowed.

Before the MME receives a bearer processing request from at least one of the two pieces of UE which have performed a D2D communication negotiation through the eNodeB, the method may further include: the eNodeB receives a communication request from at least one of the two pieces of UE which have performed a D2D communication negotiation, wherein the communication request carries the resource information that the D2D communication needs; and the eNodeB allocates resources to the two pieces of UE according to the communication request.

After the eNodeB allocates resources to the two pieces of UE according to the communication request which is received by the eNodeB from one of the two pieces of UE, the method may further include: the eNodeB associates the contexts of the two pieces of UE according to the identifier of the UE carried in the communication request; the eNodeB sends a communication acknowledgement message carrying the information of resources allocated to the UE to the UE which sends the communication request; and the eNodeB sends a communication notification message carrying the information of resources allocated to the UE to the other piece of UE according to the association of the contexts of the two pieces of UE.

After the eNodeB allocates resources to the two pieces of UE according to the communication request which is received by the eNodeB from the two pieces of UE, the method may further include: the eNodeB sends a communication acknowledgement message which carries the information of resources allocated to the UE to the two pieces of UE respectively.

After the eNodeB allocates resources to the two pieces of UE according to the communication request respectively, the method may further include: the two pieces of UE exchange information according to the resources allocated by the eNodeB.

After the MME sends the bearer resource processing request message to the GW, the method may further include: the GW removes at least one bearer related to the CN path corresponding to a data flow transmitted in the D2D path; and the GW initiates bearer modification procedure or bearer deactivation procedure, wherein the bearer modification procedure or the bearer deactivation procedure is used for removing the bearer related to the CN path corresponding to the data flow transmitted in the D2D path.

After the MME sends the bearer resource processing request message to the GW, the method may further include: the GW retains at least one bearer related to the CN path corresponding to the data flow transmitted in the D2D path; and the GW notifies the UE that data is allowed to be transmitted in the D2D path.

After the MME sends the bearer resource processing request message to the GW, the method may further include: the GW notifies a charging gateway that the data of the UE has been switched to the D2D path according to the bearer resource processing request message.

The request message or the bearer processing request may contain the data flow information to be switched to the D2D path and the identifier of the UE.

The bearer resource processing request message contains information for indicating that the data path on the network side is switched from the CN path to the D2D path to be transmitted.

According to another aspect, an embodiment of the present invention provides a method for switching a communication path, including: an MME receives at least one bearer processing request message, wherein the bearer processing request message is used for requesting for a communication in a CN path; and the MME sends at least one bearer resource processing request message to a GW, wherein the bearer resource processing request message is used for notifying that the data path on the network side is switched from a D2D path to the CN path to be transmitted.

The step that the MME receives the bearer processing request message may include: the MME receives the bearer processing request message from the UE through an eNodeB; or, the MME receives the bearer processing request message from the eNodeB.

Before the MME receives the bearer processing request message from the UE through the eNodeB, the method may further include: the UE detects a communication link, and when it is detected that the quality of the communication link is reduced to a threshold, the bearer processing request message is sent through the eNodeB.

Before the MME receives the bearer processing request message from the UE through the eNodeB, the method may further include: the eNodeB receives a measurement report from the UE and judges whether the UE needs to switch a path according to the measurement report; when the result is positive, the eNodeB sends a path switching request to the UE; and the UE sends the bearer processing request message through the eNodeB after receiving the path switching request.

Before the MME receives the bearer processing request message from the eNodeB, the method may further include: the eNodeB receives a measurement report from the UE and judges whether the UE needs to switch a path according to the measurement report; when the result is positive, the eNodeB acquires the data flow information transmitted in the D2D path according to the context information of the UE; and the eNodeB sends the bearer processing request message according to the data flow information.

After the MME sends the bearer resource processing request message to the GW, the method may further include: the GW re-activates at least one bearer related to the CN path for the data transmitted in the D2D path; and the GW initiates bearer modification procedure or bearer deactivation procedure, wherein the bearer modification procedure or the bearer deactivation procedure is used for re-activating at least one bearer related to the CN path for the data transmitted in the D2D path.

The step that the GW re-activatees the bearer related to the CN path for the data transmitted in the D2D path may include: the GW restores the bearer related to the CN path for the data transmitted in the D2D path; and the GW notifies the UE that the data is allowed to be transmitted in the CN path.

After the MME sends the bearer resource processing request message to the GW, the method may further include: the GW notifies a charging gateway that the data of the UE has been switched to the CN path according to the bearer resource processing request message.

The bearer resource processing request message contains information for indicating that the data path of the network side is switched from the D2D path to the CN path to be transmitted.

In another aspect, an embodiment of the present invention provides a system for switching a communication path, which includes an MME, an eNodeB and a GW. The MME includes a message receiving component which is configured to receive a request message, wherein the request message is used for requesting for a communication in a D2D path, and a message sending component which is configured to send at least one bearer resource processing request message to the GW, wherein the bearer resource processing request message is used for notifying that the data path of a network side is switched from a CN path to the D2D path to be transmitted.

The message receiving component includes: a first receiving unit which is configured to receive the request message from the eNodeB, or, a second receiving unit which is configured to receive at least one bearer processing request from at least one of the two pieces of UE which have performed a D2D communication negotiation through the eNodeB.

The eNodeB includes: a verification request receiving component which is configured to receive a verification request from the UE, wherein the verification request carries the identifier of the UE; and a verification component which is configured to associate the contexts of the two pieces of UE according to the context information of the two pieces of UE stored locally and identify the two pieces of UE according to the associated contexts.

The eNodeB may further include: a receiving component which is configured to receive the verification request from the UE, wherein the verification request carries the identifier of the UE. The MME may further include a receiving component which is configured to receive a verification request message from the eNodeB, wherein the verification request message carries the identifier of the UE, a judgement component which is configured to judge whether to allow the communication between the two pieces of UE according to a local policy and/or the subscription information of the UE, and an indication component which is configured to send a verification request acknowledgement message to the eNodeB if the result is that the communication between the two pieces of UE is allowed, wherein the verification request acknowledgement message is used for indicating that the communication between the two pieces of UE is allowed.

The eNodeB may further include: a communication request receiving component which is configured to receive a communication request from at least one of the two pieces of UE which have performed a D2D communication negotiation, wherein the communication request carries the resource information that the D2D communication needs, and a resource allocation component which is configured to allocate resources to the two pieces of UE according to the communication request.

If receiving the communication request from one of the two pieces of UE, the eNodeB may further include: an association component which is configured to associate the contexts of the two pieces of UE according to the identifier of the UE carried in the communication request, a first sending component which is configured to send a communication acknowledgement message carrying the information of resources allocated to the UE to the UE which sends the communication request, and a second sending component which is configured to send a communication notification message carrying the information of resources allocated to the UE to the other piece of UE according to the association of the contexts of the two pieces of UE.

If receiving the communication request from the two pieces of UE, the eNodeB may further include an acknowledgement message sending component which is configured to send a communication acknowledgement message which carries the information of resources allocated to the UE to the two pieces of UE respectively.

The GW includes a deletion component which is configured to remove at least one bearer related to the CN path corresponding to the data flow transmitted in the D2D path, and a flow initiating component which is configured to initiate bearer modification procedure or bearer deactivation procedure, wherein the bearer modification procedure or the bearer deactivation procedure is used for deleting at least one bearer related to the CN path corresponding to the data flow transmitted in the D2D path.

The GW may further include at least one bearer retaining component which is configured to retain the bearer related to the CN path corresponding to the data flow transmitted in the D2D path, and a notification component which is configured to notify the UE that data is allowed to be transmitted in the D2D path.

The GW may further include a switching notification component which is configured to notify a charging gateway that the data of the UE has been switched to the D2D path according to the bearer resource processing request message.

In another aspect, an embodiment of the present invention provides a device for switching a communication path, including: a communication request sending component which is configured to send a communication request to a eNodeB, wherein the communication request carries the identifier of the UE and data flow information switched to a D2D path, a request bearer resource modification message sending component which is configured to send a resource processing request to the MME through the eNodeB, wherein the resource processing request carries information for indicating that the data path of the network side is switched from a CN path to the D2D path and the data flow information switched to the D2D path.

In another aspect, an embodiment of the present invention provides a system for switching a communication path, which includes an MME, a eNodeB and a GW. The MME includes a message receiving component which is configured to receive at least one bearer processing request message, wherein the bearer processing request message is used for requesting for a communication in a CN path, and a message sending component which is configured to send at least one bearer resource processing request message to the GW, wherein the bearer resource processing request message is used for notifying that the data path of a network side is switched from a D2D path to the CN path to be transmitted.

The message receiving component includes a first receiving unit which is configured to receive the bearer processing request message from a piece of UE through the eNodeB or a second receiving unit which is configured to receive the bearer processing request message from the eNodeB.

The eNodeB includes: a report acquisition component which is configured to receive a measurement report from the UE, a judgement component which is configured to judge whether the UE needs to switch a path according to the measurement report, and a request sending component which is configured to send a path switching request to the UE if the result is positive, wherein the path switching request is used for indicating that the bearer processing request message is sent to the MME through the eNodeB.

The eNodeB may further include an information acquisition component which is configured to acquire the data flow information of the D2D path according to the context information of the UE, and a message sending component which is configured to send the bearer processing request message according to the data flow information.

The GW includes at least one bearer re-activation component which is configured to re-activate at least one bearer related to the CN path for the data transmitted in the D2D path, and a flow initiating component which is configured to initiate bearer modification procedure or bearer deactivation procedure, wherein the bearer modification procedure or the bearer deactivation procedure is used for re-activating the bearer related to the CN path for the data transmitted in the D2D path.

The bearer re-activation component includes at least one bearer restoration unit which is configured to restore the bearer related to the CN path for the data transmitted in the D2D path, and a notification unit which is configured to notify the UE that data is allowed to be transmitted in the CN path.

The GW may further include a switching notification component which is configured to notify a charging gateway that the data of the UE has been switched to the CN path according to the bearer resource processing request message.

In another aspect, an embodiment of the present invention provides a device for switching a communication path, including: a determination component which is configured to determine that the data path of a network side needs to be switched from a D2D path to a CN path to be transmitted, and a request message sending component which is configured to send at least one bearer processing request message to the MME through the eNodeB, wherein the bearer processing request message is used for requesting for a communication in the CN path.

The determination component includes a link detection unit which is configured to detect a communication link; and the request message sending component includes a first sending unit which is configured to send the bearer processing request message to the MME through the eNodeB when the link detection unit detects that the quality of the communication link is reduced to the threshold.

The determination component may further include a reporting unit which is configured to send a measurement report to the eNodeB, and a receiving unit which is configured to receive a path switching request from the eNodeB based on the measurement report.

The request message sending component may further include: a second sending unit which is configured to send the bearer processing request message to the MME through the eNodeB after the receiving unit receives the path switching request.

Through the embodiments of the present invention, an MME sends at least one bearer resource processing request message to a GW after receiving a request message for requesting for a communication in a D2D path, wherein the bearer resource processing request message is used for notifying that the data path of a network side is switched from a CN path to the D2D path to be transmitted; or, the MME sends the bearer resource processing request message to the GW after receiving at least one bearer processing request message for requesting for a communication in the CN path, wherein the bearer resource processing request message is used for notifying that the data path for transmitting data on a network side is switched from the D2D path to the CN path, and the problem that the continuity of a data service cannot be guaranteed during path switching in the related arts is solved, so that the continuity of the data service is guaranteed during path switching, and the path switching quality and the service experience of the user are improved.

### Brief Description of the Drawings

Drawings, provided for further understanding of the present invention and forming a part of the specification, are used to explain the present invention together with embodiments of the present invention rather than to limit the present invention, wherein:
Fig. 1 is a diagram showing a structure of an evolved packet system according to the related art;
Fig. 2 is a diagram showing a communication of a terminal supporting a D2D function according to the related art;
Fig. 3 is a flowchart of a method for switching a communication path from a CN path to a D2D path according to an embodiment of the present invention;
Fig. 4 is flowchart of a first way for implementing switching from a CN path to a D2D path according to an embodiment of the present invention;
Fig. 5 is flowchart of a second way for implementing switching from a CN path to a D2D path according to an embodiment of the present invention;
Fig. 6 is flowchart of a third way for implementing switching from a CN path to a D2D path according to an embodiment of the present invention;
Fig. 7 is a block diagram showing a structure of a system for switching a communication path from a CN path to a D2D path according to an embodiment of the present invention;
Fig. 8 is a block diagram showing a structure of a device for switching a communication path from a CN path to a D2D path according to an embodiment of the present invention;
Fig. 9 is a flowchart of a method for switching a communication path from a CN path to a D2D path according to an embodiment of the present invention;
Fig. 10 is flowchart of a first way for implementing switching from a D2D path to a CN path according to an embodiment of the present invention;
Fig. 11 is flowchart of a second way for implementing switching from a D2D path to a CN path according to an embodiment of the present invention;
Fig. 12 is flowchart of a third way for implementing switching from a D2D path to a CN path according to an embodiment of the present invention;
Fig. 13 is a block diagram showing a structure of a system for switching a communication path from a D2D path to a CN path according to an embodiment of the present invention; and
Fig. 14 is a block diagram showing a structure of a device for switching a communication path from a D2D path to a CN path according to an embodiment of the present invention.

### Detailed Description of the Embodiments

The embodiments are described in conjunction with the drawings as follows. It shall be understood that the embodiments of the present application and the features of the embodiments can be combined with each other if there is no conflict.

In order to guarantee the continuity of a data service during switching a communication path, an embodiment of the present invention provides a method, a system and a device for switching a communication path. They are described below in detail through embodiments.

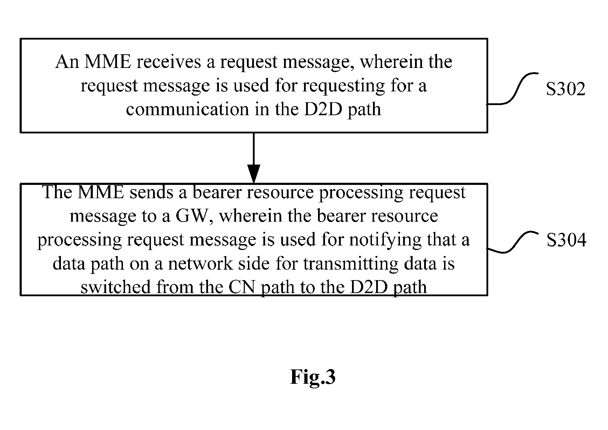

An embodiment provides a method for switching a communication path. Fig. 3 is a flowchart of a method for switching a communication path from a CN path to a D2D path according to an embodiment of the present invention. As shown in Fig. 3, the method includes the following steps (Steps 302 to 304).

Step 302: An MME receives a request message, wherein the request message is used for requesting for a communication in the D2D path.

Step 304: The MME sends at least one bearer resource processing request message to a GW, wherein the bearer resource processing request message is used for notifying that a data path on a network side for transmitting data is switched from the CN path to the D2D path.

Through the method, the MME sends the bearer resource processing request message to the GW after receiving the request message for requesting for the communication in the D2D path, wherein the bearer resource processing request message is used for notifying that the data path on the network side is switched from the CN path to the D2D path to be transmitted, so that the problem that the continuity of a data service cannot be guaranteed during path switching in the related art is solved, thus guaranteeing the continuity of the data service during path switching, and improving the path switching quality and the service experience of the user.

Preferably, the step that the MME receives the request message may include: the MME receives the request message from an eNodeB; or, the MME receives at least one bearer processing request from at least one of the two pieces of UE, which have performed a D2D communication, through the eNodeB. Through the way above, a path switching request may be initiated by the eNodeB or the UE, so that the scope of application is expanded and the flexibility in use is improved.

Before the MME receives the request message from the eNodeB, the embodiment provides a preferred implementation way: the eNodeB receives a verification request from the UE, wherein the verification request carries an identifier of the UE; and the eNodeB associates contexts of the two pieces of UE according to their context information stored in the eNodeB locally, and verifies them according to the associated contexts. Through this way, the two pieces of UE have been verified by the eNodeB; and after the two pieces of UE have passed the verification successfully, the eNodeB may send a path switching request message to the MME, so that the method for switching a communication path is more perfect and safe.

Before the MME receives the request message from the eNodeB, an embodiment provides a preferred implementation way: the eNodeB receives a verification request from the UE, wherein the verification request carries the identifier of the UE; the MME receives a verification request message from the eNodeB, wherein the verification request message carries the identifier of the UE; the MME judges whether to allow a communication is performed between the two pieces of UE according to a local policy and/or subscription information of the two pieces of UE; and when a result is that the communication between the two pieces of UE is allowed, the MME sends a verification request acknowledgement message to the eNodeB, wherein the verification request acknowledgement message is used for indicating that the communication between the two pieces of UE is allowed. Through this way, the UE has been verified, so that the method for switching a communication path is more perfect and safe.

Before the MME receives at least one bearer processing request from at least one of the two pieces of UE, which have performed a D2D communication negotiation, through the eNodeB, the embodiment provides a preferred implementation way: the eNodeB receives the communication request from the at least one of the two pieces of UE which have performed a D2D communication negotiation, wherein the communication request carries resource information for D2D communication; and the eNodeB allocates resources to the two pieces of UE according to the communication request. This way provides a basis for the subsequent path switching between the two pieces of UE.

When the UE sends the communication request to the eNodeB, there are two implementation ways: in the first way, one of the two pieces of UE sends the communication request to the eNodeB; and in the second way, both of the two pieces of UE send the communication request to the eNodeB. The two ways are described below respectively.

For the first condition above, after the eNodeB allocates resources to the two pieces of UE according to the communication request which is received by the eNodeB from one of the two pieces of UE, the embodiment provides a preferred implementation way: the eNodeB associates the contexts of the two pieces of UE according to the identifier of the UE carried in the communication request; the eNodeB sends a communication acknowledgement message carrying information of resources allocated to the UE to the UE sending the communication request; and the eNodeB sends a communication notification message carrying the information of resources allocated to the UE to the other piece of UE according to the association of the contexts of the two pieces of UE. This way provides a basis for the subsequent path switching between the two pieces of UE.

For the second condition above, after the eNodeB allocates resources to the two pieces of UE according to the communication requests which are received by the eNodeB from the two pieces of UE, the embodiment provides a preferred implementation way: the eNodeB sends communication acknowledgement messages which carries information of resources allocated to the corresponding UE to the two pieces of UE respectively. This way provides a basis for the subsequent path switching between the two pieces of UE.

After the eNodeB allocates resources to the two pieces of UE according to the communication request respectively, the method may further include: the two pieces of UE exchange information according to the resources allocated by the eNodeB.

After the MME sends the bearer resource processing request message to the GW, the embodiment provides a preferred implementation way: the GW removes at least one bearer related to the CN path corresponding to data flow transmitted in the D2D path; and the GW initiates bearer modification procedure or bearer deactivation procedure, wherein the bearer modification procedure or the bearer deactivation procedure is used for deleting the bearer related to the CN path corresponding to the data flow transmitted in the D2D path. Through this way, the bearer related to the CN path is removed so as to provide a basis for the subsequent switching to the D2D path.

After the MME sends the bearer resource processing request message to the GW, the embodiment provides a preferred implementation way: the GW retains the bearer related to the CN path corresponding to the data flow transmitted in the D2D path; and the GW notifies the UE that data is allowed to be transmitted in the D2D path. Through this way, the bearer related to the CN path is set to be unavailable to provide a basis for the subsequent D2D path switching; and when it is necessary to switch from the D2D path back to the CN path, only the bearer related to the CN path needs to be set to available, so that the switching efficiency is improved and less resources are wasted.

After the MME sends the bearer resource processing request message to the GW, the embodiment provides a preferred implementation way: the GW notifies a charging gateway that the data of the UE has been switched to the D2D path to be transmitted according to the bearer resource processing request message. Through this way, charging may be implemented in the D2D path.

Preferably, the request message or the bearer processing request contains the data flow information switched to the D2D path and the identifier of the UE. The bearer resource processing request message contains information for indicating that data path on the network side is switched from the CN path to the D2D path for transmitting.

To describe the objectives, the technical solution and the advantages of the present invention more clearly, the embodiments of the present invention may be further described below in combination with the embodiments and the drawings in detail.

### First embodiment

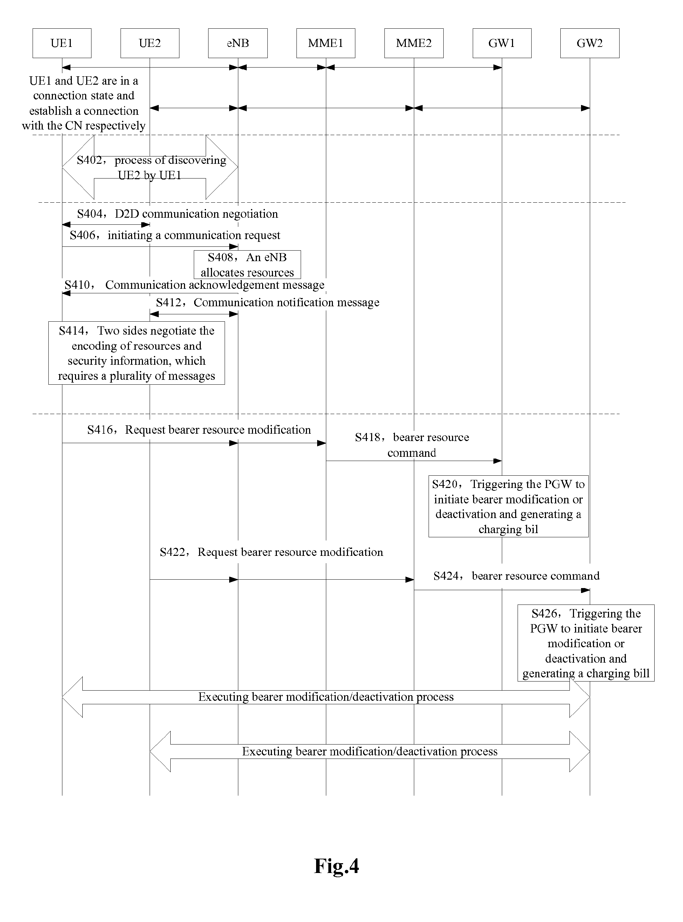

One way for switching a service from a CN path to a D2D path is described in the embodiment. The application scenario for this way is that UE1 and UE2 establish data connection with a core network, and when they are close to each other, the data detouring from the CN may be transmitted from a local connection path. Fig. 4 is a flowchart of a first way for implementing switching from a CN path to a D2D path according to an embodiment of the present invention. As shown in Fig. 4, the flow includes the following steps (Steps 402 to 426).

Step 402: Two pieces of UE complete a discovery process mutually, wherein this process depends on the existing D2D discovery flow. Or, two Users find that their UE are very close to each other and send instructions to their UE respectively, thus, the D2D discovery flow between two pieces of UE or between a piece of UE and a network does not need to be executed in this step.

Step 404: Two pieces of UE initiate a D2D communication negotiation, wherein in this process, the two pieces of UE need to negotiate for the resources that the D2D communication needs, including QoS, frequency band information and other information. Switching to the D2D path may be implemented by negotiation performed in an application layer in this process. If the discovery process in Step 402 is not executed, it may be necessary to acquire the identifier information of UE2 in this process.

Step 406: UE1 initiates a communication request to an eNB, wherein the communication request carries the identifiers of UE1 and UE2 and the resource information for D2D communication, including QoS, frequency band and other information. If UE1 is in a connection state and the eNB has acquired the identifier of UE1 in the previous process, the identifier of UE1 in the message is optional.

Step 408: The eNB associates contexts of two pieces of UE according to locally-stored contexts including context information of UE1 and UE2. The eNB allocates necessary resources to the two terminals according to the request of UE1.

Step 410: The eNB returns a communication acknowledgement message to UE1, wherein the communication acknowledgement message carries the information of resources allocated to UE1.

Step 412: The eNB sends a communication notification message to UE2 according to the previous association, wherein the communication notification message carries the information of resources allocated to UE2. The message may be a response message, namely, UE2 needs to returns a response message after receiving the communication notification message.

Of course, in Steps 406 to 412, UE2 may initiate a communication request, and the eNB initiates a communication notification to UE1 to allocate resources after completing authorization.

Two pieces of UE may negotiate which UE initiates the resource request in Step 404. If they do not execute negotiation in Step 404, two pieces of UE may initiate the resource request to the eNB respectively, and the eNB may identify it by the association in Step 408 to avoid repeated resource allocation.

Step 414: Two pieces of UE may further interact information according to the information acquired from the eNB. This step is optional.

Step 416: UE1 sends a request bearer resource modification message to an MME through the eNB, wherein the request bearer resource modification message carries a D2D communication indication and data flow information to be transmitted in the D2D path.

Step 418: The MME sends at least one bearer resource command to GW1 corresponding to the UE (including SGW and PGW), wherein the bearer resource command carries a D2D communication indication and data flow information to be communicated in the D2D path.

Step 420: GW1 (including SGW and PGW) triggers the PGW to initiate bearer modification procedure or bearer deactivation procedure, removes the related data flow information in the CN path and generates a corresponding charging bill according to the indication in the message. The PGW further needs to remove the related data flow information in the CN path according to the information carried in the message and initiates bearer modification procedure and bearer deactivation procedure according to the binding relationships between the data flow and different bearers. This flow is similar to the prior art, thereby needing no further description. However, in this process, it is necessary to indicate the MME/eNB/UE that the reason that the bearer is modified or removed is for switching to the D2D communication path.

The following bearer modification or bearer deactivation process is optional, and these data flows may be retained by a CN bearer at the same time in order to be switched from the D2D path to the CN path quickly. If the PGW does not execute this process, a response message may be sent to the UE separately through the MME and the eNB.

Steps 422 to 426 are initiated by UE2, wherein Steps 416 to 420, and Steps 422 to 426 are interchangeable in sequence and are initiated by two pieces of UE respectively. In addition, the related message in Steps 416 to 426 may multiplex the message in the existing request bearer resource modification process and is implemented by extending related messages. Or, it is implemented by defining a new message.

### Second embodiment

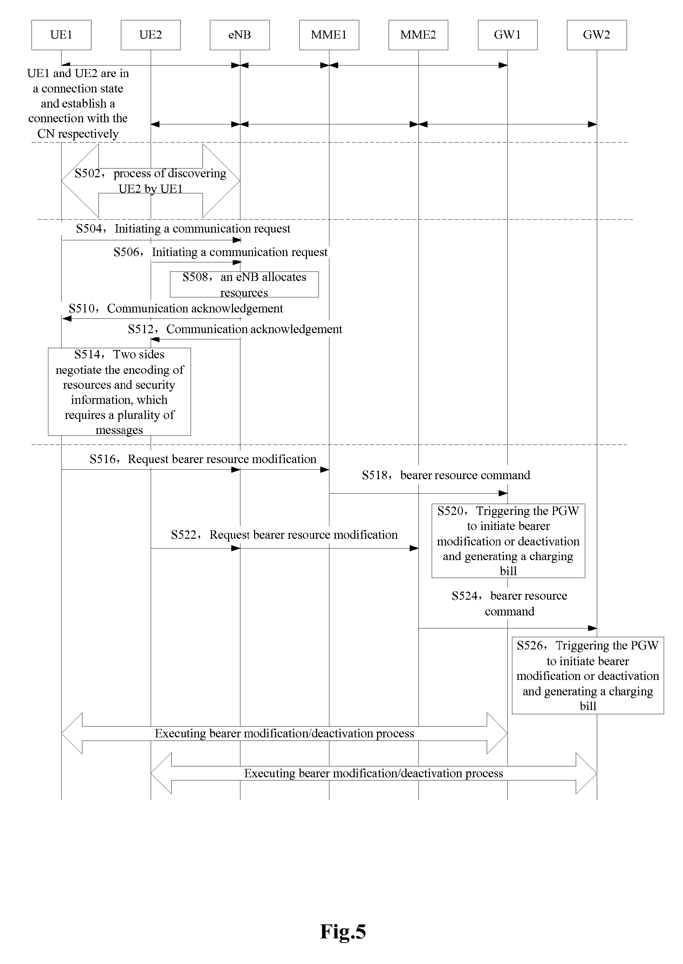

A second way for switching a service from a CN path to a D2D path is described in the embodiment. Fig. 5 is a flowchart of a second way for implementing switching from a CN path to a D2D path according to an embodiment of the present invention. The application scenario of the implementation way and the implementation way here is similar to that of the first embodiment, and the difference lies in that a piece of UE may request for resources in a different way and stage, namely, Steps 504 to 512 are different from Steps 406 to 412 in the first embodiment, and other steps are similar. As shown in Fig. 5, the flow includes the following steps (Steps 502 to 526).

Step 502: Two pieces of UE complete a discovery process mutually, wherein this process depends on the existing D2D discovery flow. Or, users find that their UE is very close to each other and send instructions to their UE respectively, thus, the D2D discovery flow between two pieces of UE or between a piece of UE and a network does not need to be executed in this step.

Step 504: UE1 initiates a communication request to an eNB, wherein the request carries the identifiers of UE1 and UE2 and the resource information for D2D communication, including QoS, frequency band and other information. If UE1 is in a connection state and the eNB has acquired the identifier of UE1 through the previous process, the identifier of UE1 in the message is optional. If the eNB authorizes resources for the two pieces of UE respectively, the identifier of UE2 in the message is also optional.

Step 506: UE2 initiates a communication request to the eNB, wherein the communication request carries the identifiers of UE1 and UE2 and the resource information for D2D communication, including QoS, frequency band and other information. If UE2 is in a connection state and the eNB has acquired the identifier of UE2 through the previous process, the identifier of UE2 in the message is optional. If the eNB authorizes resources for the two pieces of UE respectively, the identifier of UE1 in the message is also optional.

Step 508: If the identifiers of the two pieces of UE are carried in Step 504 or Step 506, the eNB associates the contexts of two users according to the context information stored locally, including the context information of UE1 and the context information of UE2. The eNB allocates resources for D2D communication to the two pieces of UE according to the requests from UE1 and UE2.

Step 510: The eNB returns a communication acknowledgement message to UE1, wherein the communication acknowledgement message carries the information of resources allocated to UE1.

Step 512: The eNB returns a communication acknowledgement message to UE2, wherein the communication acknowledgement message carries the information of resources allocated to UE2.

Steps 514 to 526 are the same as Steps 414 to 426 in the first embodiment, thereby needing no further description.

### Third embodiment

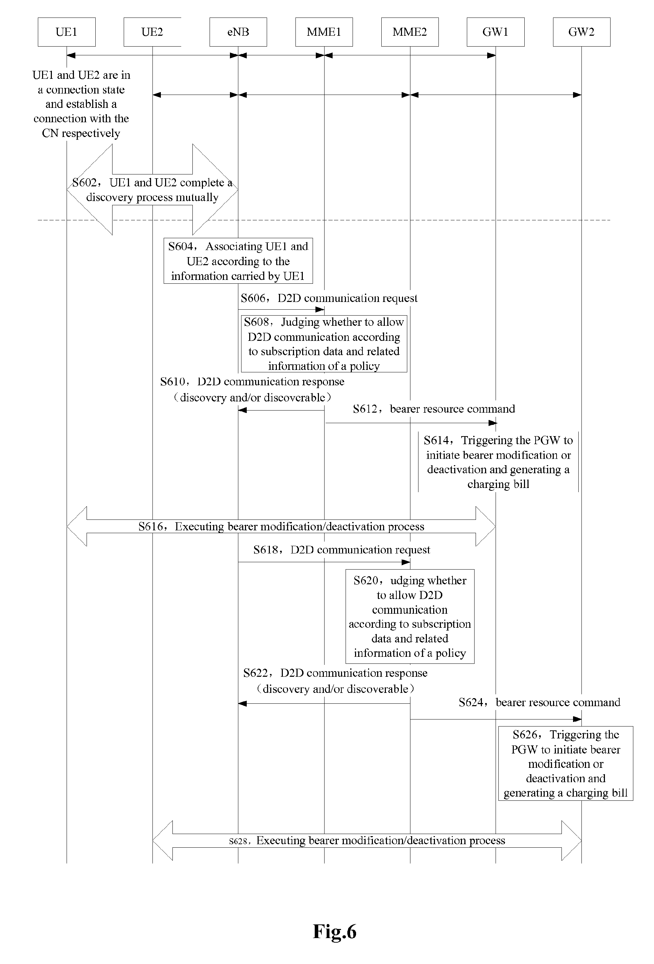

A third way for switching a service from a CN path to a D2D path is described in the embodiment. Fig. 6 is a flowchart of a third way for implementing switching from a CN path to a D2D path according to an embodiment of the present invention. The application scenario of the implementation way is similar to that of the first embodiment. As shown in Fig. 6, the flow includes the following steps (Steps 602 to 628).

Step 602: Two pieces of UE complete a discovery process mutually, wherein this process depends on the existing D2D discovery flow. In this process, UE1 and UE2 need to be identified by an eNB respectively to ensure that they may communicate with each other.

Step 604: The eNB receives a verification request(s) from UE1 and/or UE2, wherein the verification request(s) carries a corresponding identifier. The eNB associates the contexts of two pieces of UE according to a locally-stored context information including the context information of UE1 and UE2. If the contexts of UE1 and UE2 stored by the eNB contain the information which enables the two pieces of UE to pass the verification, the eNB completes the verification, otherwise, a verification request is sent to the MME.

Step 606: The eNB sends a D2D communication request message to MME1, wherein the communication request message carries the identifiers of UE1 and UE2.

Step 608: MME1 judges whether to allow a D2D communication to be performed between UE1 and UE2 according to a local policy, subscription information of UE1 and other information.

Step 610: The MME sends a D2D communication response message (discovery and/or discoverable) to the eNB, and indicates whether to allow a communication to be performed between the two pieces of UE.

If the verification has been completed in Step 604, the identifier of UE2 does not need to be carried in Step 606, and the verification may be not performed by the MME in Step 608, and Step 610 is optional. Step 606 is used for notifying the MME to initiate a CN path switching, so that the message further needs to contain data flow information for switching to a D2D path.

Step 612: The MME sends at least one bearer resource command to GW1 of the UE (including SGW and PGW), wherein the bearer resource command carries a D2D communication indication and data flow information to be transmitted in the D2D path.

Step 614: GW1 (including SGW and PGW) generates a corresponding charging bill according to an indication in the message. The PGW may further remove the related data flow information in the CN path by at least one bearer modification process or at least one bearer deactivation process according to the information carried in the message.

Step 616: The PGW initiates bearer modification procedure ore bearer deactivation procedure according to the binding relationships between data flow and different bearers. However, in this process, it may be necessary to indicate the MME/eNB/UE that the reason that the bearer is removed or modified is for switching to the D2D path.

The bearer modification process or the bearer deactivation process is optional, and these data flows may be retained by a CN bearer at the same time in order to be switched from the D2D path to the CN path quickly. If the PGW does not execute this process, a response message may be sent to the UE separately through the MME and the eNB.

Steps 618 to 628 are similar to Steps 606 to 616, in which the related network elements of UE2 are operated. And they are interchangeable in sequence, thereby needing no further description.

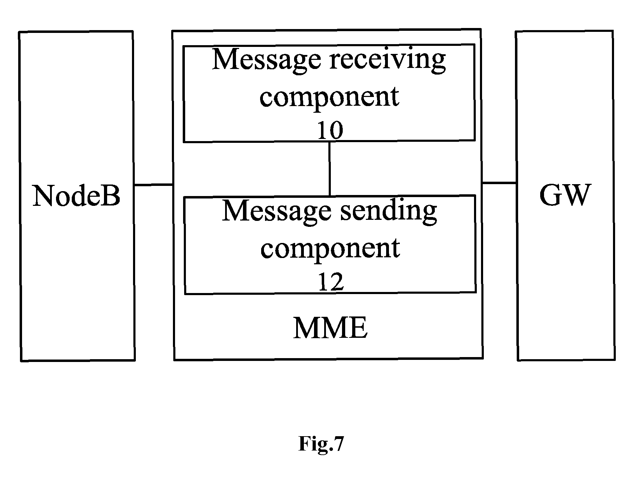

Based on the method for switching a communication path described in the embodiments above, an embodiment of the present invention further provides a system for switching a communication path, which may be arranged on a network side and is configured to implement the embodiments above. Fig. 7 is a block diagram showing a structure of a system for switching a communication path from a CN path to a D2D path according to an embodiment of the present invention. As shown in Fig. 7, the system includes an eNodeB, an MME and a GW. The MME is connected to the eNodeB and the GW respectively and includes:
a message receiving component 10 is configured to receive a request message, wherein the request message is used for requesting for a communication in a D2D path; and
a message sending component 12 is connected to the message receiving component 10 and is configured to send at least one bearer resource processing request message to the GW, wherein the bearer resource processing request message is used for notifying that a data path on a network side for transmitting data is switched from a CN path to a D2D path.

Through the system, the message sending component 12 of the MME sends the bearer resource processing request message to the GW after the message receiving component 10 of the MME receives the request message for requesting for a communication in a D2D path, wherein the bearer resource processing request message is used for notifying that the data path on the network side for transmitting data is switched from the CN path to the D2D path, and the problem that the continuity of a data service cannot be guaranteed during path switching in the related art is solved, so that the continuity of the data service is guaranteed during the switching from the CN path to the D2D path, and the path switching quality and the service experience of the user are improved.

Preferably, the message receiving component 10 includes: a first receiving unit configured to receive the request message from the eNodeB, or, a second receiving unit configured to receive at least one bearer processing request from at least one of the two pieces of UE, which have performed a D2D communication negotiation, through the eNodeB. Through the structure above, a path switching request may be initiated by the eNodeB or the UE, so that the scope of application is expanded and the flexibility in use is improved.

Preferably, the eNodeB includes: a verification request receiving component configured to receive a verification request from the UE, wherein the verification request carries the identifier(s) of the UE; and a verification component configured to associate the contexts of the two pieces of UE according to the context information of the two pieces of UE stored locally and verify the two pieces of UE according to the associated contexts. Through the structure above, the UE has been verified by the eNodeB; and after the UE passes the verification successfully, the eNodeB may send a path switching request message to the MME, so that the method for switching a communication path is more perfect and safe.

Preferably, the eNodeB may further include: a receiving component configured to receive a verification request from the at least one of the two pieces of UE, wherein the verification request carries the identifier of the UE. The MME may further include a receiving component configured to receive a verification request message from the eNodeB, wherein the verification request message carries the identifier of the UE, a judgement component configured to judge whether to allow the communication to be performed between the two pieces of UE according to a local policy and/or the subscription information of the UE, and an indication component configured to send a verification request acknowledgement message to the eNodeB if the result is that the communication between the two pieces of UE is allowed, wherein the verification request acknowledgement message is used for indicating that the communication between the two pieces of UE is allowed. Through this structure, the UE has been verified, so that the method for switching a communication path is more perfect and safe.

Preferably, the eNodeB may further include: a communication request receiving component configured to receive a communication request from at least one of the two pieces of UE, which have performed a D2D communication negotiation, wherein the communication request carries the resource information for D2D communication, and a resource allocation component configured to allocate resources to the two pieces of UE according to the communication request. This structure provides a basis for the subsequent path switching between the two pieces of UE.

When the UE sends the communication request to the eNodeB, there are two implementation ways: in the first way, one of the two pieces of UE sends the communication request to the eNodeB, and in the second way, both of the two pieces of UE send the communication request to the eNodeB. The two ways are described below respectively.

For the first condition described above, if receiving the communication request from one of the two pieces of UE, the eNodeB may further include: an association component configured to associate the contexts of the two pieces of UE according to their identifiers carried in the communication request, a first sending component configured to send a communication acknowledgement message carrying the information of resources allocated to the UE to the UE sending the communication request, and a second sending component configured to send a communication notification message carrying the information of resources allocated to the UE to the other piece of UE according to the association of the contexts of the two pieces of UE. This structure provides a basis for the subsequent path switching between the two pieces of UE.

For the second condition described above, if the eNodeB receives the communication request from the two pieces of UE, the embodiment provides a preferred implementation way: the eNodeB may further include an acknowledgement message sending component configured to send a communication acknowledgement message which carries the information of resources allocated to the UE to the two pieces of UE respectively. This structure provides a basis for the subsequent path switching between the two pieces of UE.

After the MME sends the bearer resource processing request message to the GW, the embodiment provides a preferred implementation way: the GW includes a deletion component which is configured to remove at least one bearer related to the CN path corresponding to the data flow transmitted in the D2D path, and a flow initiating component which is configured to initiate bearer modification procedure or bearer deactivation procedure, wherein the bearer modification procedure or the bearer deactivation procedure is used for deleting the bearer related to the CN path corresponding to the data flow transmitted in the D2D path. Through this structure, the bearer related to the CN path is removed so as to provide a basis for the subsequent switching to the D2D path.

After the MME sends the bearer resource processing request message to the GW, the embodiment provides a preferred implementation way: the GW may further include at least one bearer retaining component configured to retain the bearer related to the CN path corresponding to the data flow transmitted in the D2D path, and a notification component configured to notify the UE that data is allowed to be transmitted in the D2D path. Preferably, the GW may further include a switching notification component configured to notify a charging gateway that the data of the UE has been switched to the D2D path according to the bearer resource processing request message. Through this structure, the bearer related to the CN path is set to be unavailable to provide a basis for the subsequent D2D path switching; and when it is necessary to switch from the D2D path back to the CN path, only the bearer related to the CN path needs to be set to available, so that the switching efficiency is improved and less resources are wasted.

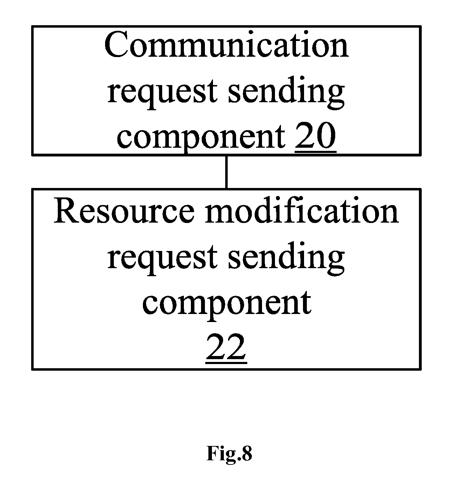

Based on the method for switching a communication path described in the embodiments above, an embodiment of the present invention further provides a device for switching a communication path, which may be arranged on a network side and is configured to implement the embodiments above. Fig. 8 is a block diagram showing the structure of a device for switching a communication path from a CN path to a D2D path according to an embodiment of the present invention. As shown in Fig. 8, the device includes a communication request sending component 20 and a request bearer resource modification message sending component 22. The structure is specifically described below.

The communication request sending component 20 is configured to send a communication request to a eNodeB, wherein the communication request carries an identifier of at least one of the two a piece of UE and data flow information switched to the D2D path.

The resource modification request sending component 22 is connected to the communication request sending component 20 and is configured to send a resource processing request to the MME through the eNodeB, wherein the resource processing request carries information for indicating that a data path on a network side for transmitting data is switched from a CN path to a D2D path and data flow information to be switched to the D2D path.

The process of switching the communication path from the CN path to the D2D path has been described above, and the process of switching the communication path from the D2D path to the CN path is described below.

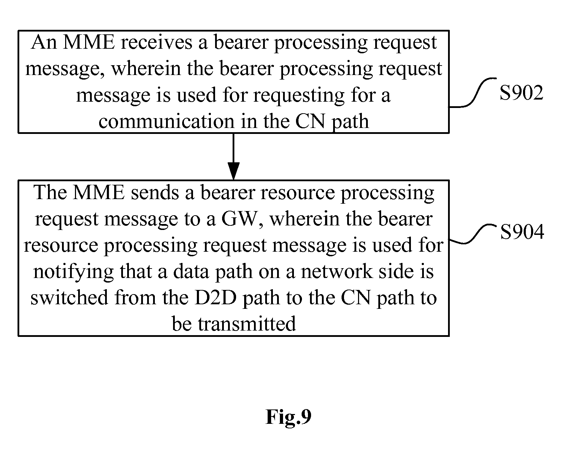

An embodiment of the present invention provides a method for switching a communication path. Fig. 9 is a flowchart of a method for switching a communication path from a D2D path to a CN path according to an embodiment of the present invention. As shown in Fig. 9, the method includes the following steps (Steps 902 to 904).

Step 902: An MME receives at least one bearer processing request message, wherein the bearer processing request message is used for requesting for a communication in the CN path.

Step 904: The MME sends at least one bearer resource processing request message to a GW, wherein the bearer resource processing request message is used for notifying that a data path on a network side is switched from the D2D path to the CN path to be transmitted.

Through the method, the MME sends the bearer resource processing request message to the GW after receiving the bearer processing request message for requesting for the communication in the CN path, wherein the bearer resource processing request message is used for notifying that the data path on the network side for transmitting data is switched from the D2D path to the CN path, and the problem that the continuity of a data service cannot be guaranteed during path switching in the related art is solved, so that the continuity of the data service is guaranteed during path switching, and the path switching quality and the service experience of the user are improved.

The step that the MME receives the bearer processing request message may include: the MME receives the bearer processing request message from the UE through a eNodeB; or, the MME receives the bearer processing request message from the eNodeB. Through the way above, the bearer processing request message for requesting for a path switching may be initiated by the eNodeB or the UE, so that the scope of application is expanded and the flexibility in use is improved.

Before the MME receives the bearer processing request message from the UE through the eNodeB, the embodiment provides a preferred implementation way: the UE detects a communication link, and when it is detected that the quality of the communication link is reduced to a threshold, the bearer processing request message is sent through the eNodeB. Through this way, the triggering condition for path switching and the scope of application are expanded.

Before the MME receives the bearer processing request message from the UE through the eNodeB, the embodiment provides a preferred implementation way: the eNodeB receives a measurement report from the UE and judges whether the UE needs a path switch according to the measurement report; when the result is positive, the eNodeB sends a path switching request to the UE; and the UE sends the bearer processing request message through the eNodeB after receiving the path switching request. Through this way, the triggering condition for path switching and the scope of application are expanded.

Before the MME receives the bearer processing request message from the eNodeB, the embodiment provides a preferred implementation way: the eNodeB receives a measurement report from the UE and judges whether the UE needs the path switch according to the measurement report; when the result is positive, the eNodeB acquires the data flow information transmitted in the D2D path according to the context information of the UE; and the eNodeB sends the bearer processing request message according to the data flow information. Through this way, the triggering condition for path switching and the scope of application are expanded.

After the MME sends the bearer resource processing request message to the GW, the embodiment provides a preferred implementation way: the GW re-activates at least one bearer related to the CN path for the data transmitted in the D2D path; and the GW initiates bearer modification procedure or bearer deactivation procedure, wherein the bearer modification procedure or the bearer deactivation procedure is used for re-activating the bearer related to the CN path corresponding to the data transmitted in the D2D path. By this way, a basis is provided for the subsequent path switching between two pieces of UE, and the bearer related to the CN path is re-activated, so as to provide a basis for the subsequent switching to the CN path.

The step that the GW re-activates the bearer related to the CN path for the data transmitted in the D2D path may include: the GW restores the bearer related to the CN path for the data transmitted in the D2D path; and the GW notifies the UE that the data is allowed to be transmitted in the CN path. By this way, a basis is provided for the subsequent path switching between two pieces of UE, the bearer related to the CN path is restored, the switching efficiency is improved and fewer resources are wasted, so as to provide a basis for the subsequent switching to the CN path.

The bearer resource processing request message contains information for indicating that the data path on the network side for transmitting data is switched from the D2D path to the CN path. After the MME sends the bearer resource processing request message to the GW, an embodiment provides a preferred implementation way: the GW notifies a charging gateway that the data of the UE has been switched to the CN path according to the bearer resource processing request message. Through this way, charging may be implemented in the CN path.

### Fourth embodiment

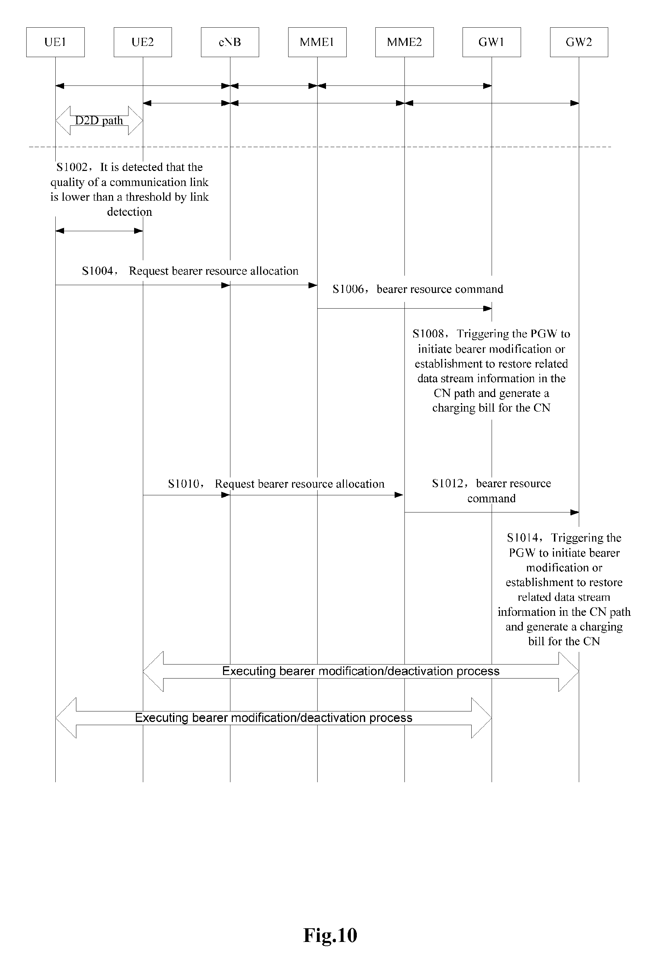

A first way for switching a service from a D2D path to a CN path is described in an embodiment, and the application scenario of this way is that UE1 and UE2 establish a D2D connection, and when the distance between them is large or when one piece of UE is moved out of the coverage range of the eNB, data needs to be switched from the D2D path to the CN path. Fig. 10 is a flowchart of a first way for implementing switching from a D2D path to a CN path according to an embodiment of the present invention. As shown in Fig. 10, the flow includes the following steps (Steps 1002 to 1014).

Step 1002: A link is detected during the communication between UE1 and UE2, and when it is found that the quality of the link is poor, it is judged that one piece of UE may be moved out of the communication scope of the D2D, thereby initiating switching to the CN path.

Step 1004: UE1 sends a resource allocation request to the MME through the eNB, wherein the resource allocation request carries data flow information needing to be switched back to the CN path and may optionally carry an indication switched back to the CN path.

Step 1006: The MME sends at least one bearer resource command to GW1 (including SGW and PGW) of the UE, wherein the bearer resource command carries data flow information needing to be switched back to the CN path and may optionally carry an indication switched back to the CN path.

Step 1008: GW1 (including SGW and PGW) generates a corresponding charging bill according to an indication in the message. The PGW further needs to restore data flow information related to the CN path according to the information carried in the message. If the corresponding CN resources are not removed previously, the PGW may reset the resources to be available and does not need to initiate bearer modification procedure or bearer activation flow. Or, the PGW notifies the MME/eNB/UE that the CN resources are available by the bearer modification procedure or the bearer activation flow or a separate response message in a hop-by-hop manner.

If the corresponding CN resources are not removed previously, the PGW initiates bearer modification procedure or at least one bearer activation flow to re-allocate the resources corresponding to the CN path according to the binding relationship between data flow and different bearers, but in this process, it may be necessary to indicate the MME/eNB/UE that the activation or modification reason is for switching to the D2D communication path in a hop-by-hop manner.

Steps 1010 to1014 are similar to Steps 1004 to 1008, in which the related network elements of UE2 are operated, and they are interchangeable in sequence, thereby needing no further description.

### Fifth embodiment

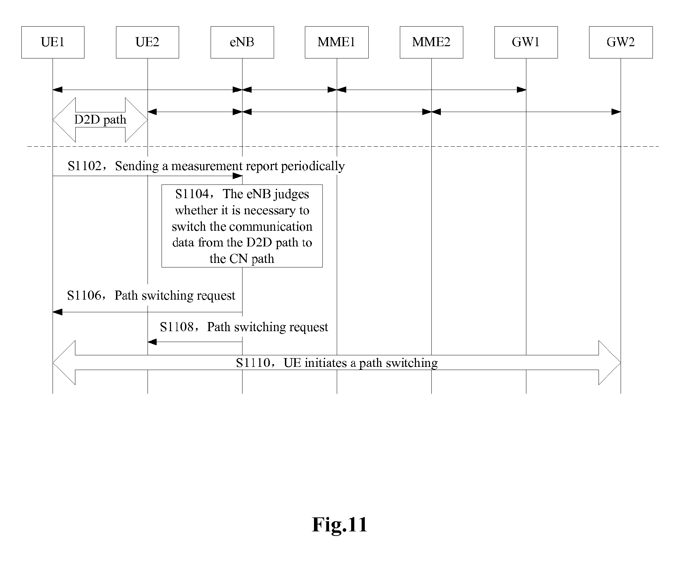

A second way for switching a service from a D2D path to a CN path is described in the embodiment, and the application scenario of the implementation way is similar to that of the fourth embodiment. Fig. 11 is a flowchart of a second way for implementing switching from a D2D path to a CN path according to an embodiment of the present invention. As shown in Fig. 11, the flow includes the following steps (Steps 1102 to 1110).

Step 1102: An eNB may require that a piece of UE should send a measurement report periodically, and judge the distance between UE1 and UE2 according to the measurement report and whether UE1 may be moved out of its own coverage area. In the step, UE1 and UE2 may send the report separately or together, and the eNB makes the judgement according to the association of the two ways.

Step 1104: The eNB judges that UE1 is carrying out a D2D communication and may be very far away from UE2 or moved out of the coverage of the eNB according to the measurement information in Step 1102, i.e., judging whether it is necessary to switch the communication data in the D2D path to the CN path.

Step 1106: The eNB sends a path switching request to UE1, wherein the path switching request carries an identifier of an opposite terminal or an identifier of a D2D session between UE1 and UE2, and is used for indicating that UE1 and UE2 switch the D2D communication data to the CN.

Step 1108: The eNB sends a path switching request to UE2, wherein the path switching request carries an identifier of the opposite terminal or the identifier of the D2D session between UE1 and UE2, and is used for indicating that UE1 and UE2 switch the D2D communication data to the CN.

Steps 1106 to 1108 are interchangeable in sequence.

Step 1110: UE1 and UE2 initiate a path switch, and this process is similar to the process in Steps 1004 to 1014 in the fourth embodiment, thereby needing no further description.

### Sixth embodiment

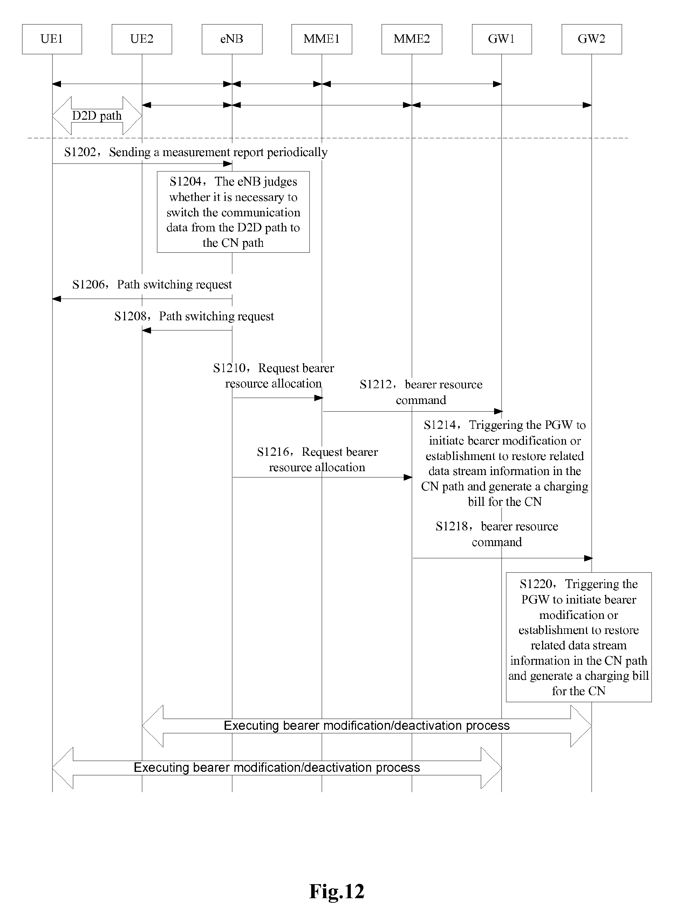

A third way for switching a service from a D2D path to a CN path is described in an embodiment, and the application scenario here is similar to that of the fourth embodiment. Fig. 12 is a flowchart of a third way for implementation switching from a D2D path to a CN path according to an embodiment of the present invention. As shown in Fig. 12, the flow includes the following steps (Steps 1202 to 1220).

Steps 1202 to 1208 in the embodiment are similar to Steps 1102 to 1108, thereby needing no further description.

Step 1210: An eNB acquires data flow information for a D2D communication according to context information of UE1 and UE2. A resource allocation request is initiated to MME1 according to the data flow information, wherein the resource allocation request carries data flow information needing to be switched back to the CN path and may optionally carry an indication indicating the path is switched back to the CN path.

Step 1212: The MME sends at least one bearer resource command to GW1 (including SGW and PGW) corresponding to the UE, wherein the bearer resource command carries data flow information needing to be switched back to the CN path and may optionally carry an indication indicating the path is switched back to the CN path.

Step 1214: GW1 (including SGW and PGW) generates a corresponding charging bill according to the indication in the message, and the PGW further needs to restore the data flow information related to the CN path according to the information carried in the message. If the corresponding CN resources are not removed previously, the PGW may reset the resources to be available and does not need to execute bearer modification procedure or bearer activation flow. Or, the PGW notifies the MME/eNB/UE that the CN resources are available by executing the bearer modification procedure or the bearer activation flow in a hop-by-hop manner.

If the corresponding CN resources are not removed previously, the PGW initiates bearer modification procedure or at least one bearer activation flow to re-allocate the resources corresponding to the CN path according to the binding relationship between data flow and different bearers, but in this process, it is necessary to indicate the MME/eNB/UE that the activation or modification reason is for switching to the D2D communication path in a hop-by-hop manner.

Steps 1216 to1220 are similar to Steps 1210 to 1214, in which the related network elements of UE2 are operated, and they are exchangeable in sequence, thereby needing no further description.

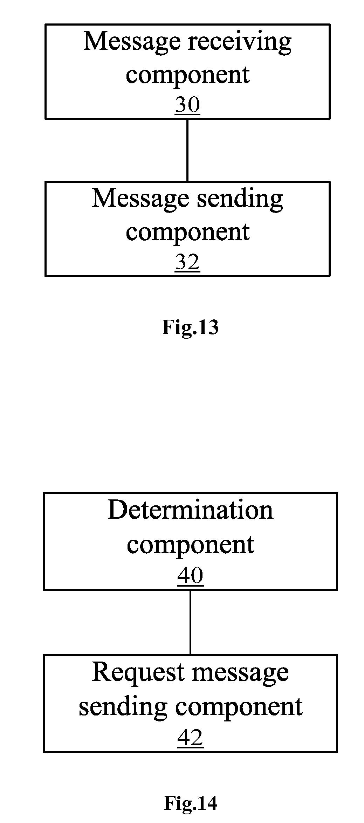

Based on the method for switching a communication path described in the embodiments above, an embodiment of the present invention further provides a system for switching a communication path, which may be arranged on a network side and is configured to implement the embodiments above. Fig. 13 is a block diagram showing the structure of a system for switching a communication path from a D2D path to a CN path according to an embodiment of the present invention. As shown in Fig. 13, the system includes a eNodeB, an MME and a GW. The MME is connected to the eNodeB and the GW respectively and includes:
a message receiving component 30 configured to receive at least one bearer processing request message, wherein the bearer processing request message is used for requesting for a communication in a CN path;
a message sending component 32 connected to the message receiving component 30 and configured to send at least one bearer resource processing request message to the GW, wherein the bearer resource processing request message is used for notifying that the data path on a network side for transmitting data is switched from a D2D path to a CN path.

Through the system, the message sending component 32 of the MME sends the bearer resource processing request message to the GW after the message receiving component 30 of the MME receives the bearer processing request message for requesting for a communication in the CN path, wherein the bearer resource processing request message is used for notifying that the data path on a network side for transmitting data is switched from the D2D path to the CN path, and the problem that the continuity of a data service cannot be guaranteed during path switching in the related art is solved, so that the continuity of the data service is guaranteed during path switching, and the path switching quality and the service experience of the user are improved.

Preferably, the message receiving component includes a first receiving unit which is configured to receive the bearer processing request message from a piece of UE through the eNodeB or a second receiving unit which is configured to receive the bearer processing request message from the eNodeB. Through the structure above, at least one bearer processing request message for requesting for a path switching may be initiated by the eNodeB or the UE, so that the range of application is expanded and the flexibility in use is improved.

Preferably, the eNodeB includes: a report acquisition component which is configured to receive a measurement report from the UE, a judgement component which is configured to judge whether the UE needs a path switch according to the measurement report, and a request sending component which is configured to send a path switching request to the UE if the result is positive, wherein the path switching request is used for indicating that the bearer processing request message is sent to the MME through the eNodeB. Through this structure, the triggering condition for path switching and the scope of application are expanded.

Preferably, the eNodeB may further include an information acquisition component configured to acquire the data flow information of the D2D path according to context information of the UE, and an information sending component configured to send the bearer processing request message according to the data flow information. Through this structure, the triggering condition for path switching and the scope of application are expanded.

Preferably, the GW includes at least one bearer re-activation component configured to re-activate at least one bearer related to the CN path for the data transmitted in the D2D path, and a flow initiating component configured to initiate bearer modification procedure or bearer deactivation procedure, wherein the bearer modification procedure or the bearer deactivation procedure is used for re-activating the bearer related to the CN path for the data transmitted in the D2D path. Through this structure, a basis is provided for the subsequent path switching between two pieces of UE, and the bearer related to the CN path is re-activated, so as to provide a basis for the subsequent switching to the CN path.

Preferably, the bearer re-activation component includes at least one bearer restoration unit which is configured to restore the bearer related to the CN path for the data transmitted in the D2D path, and a notification unit which is configured to notify the UE that data is allowed to be transmitted in the CN path. By this structure, a basis is provided for the subsequent path switching between two pieces of UE, the bearer related to the CN path is restored, the switching efficiency is improved and fewer resources are wasted, so as to provide a basis for the subsequent switching to the CN path.

Preferably, the GW may further include a switching notification component which is configured to notify a charging gateway that the data of the UE has been switched to the CN path according to the bearer resource processing request message. Through this structure, charging may be implemented in the CN path.

Based on the method for switching a communication path described in the embodiments above, an embodiment of the present invention further provides a device for switching a communication path, which may be arranged on a network side and is configured to implement the embodiments above. Fig. 14 is a block diagram showing a structure of a device for switching a communication path from a D2D path to a CN path according to an embodiment of the present invention. As shown in Fig. 14, the device includes a determination component 40 and a request message sending component 42. The structure is specifically described below.

The determination component 40 is configured to determine that it is necessary to switch the data path on a network side from a D2D path to a CN path to be transmitted.

The request message sending component 42 is connected to the determination component 40 and is configured to send at least one bearer processing request message to the MME through the eNodeB, wherein the bearer processing request message is used for requesting for a communication in the CN path.

Preferably, the determination component includes a link detection unit which is configured to detect a communication link; and the request message sending component includes a first sending unit which is configured to send the bearer processing request message to the MME through the eNodeB when the link detection unit detects that the quality of the communication link is reduced to the threshold.

Preferably, the determination component may further include a reporting unit which is configured to send a measurement report to the eNodeB, and a receiving unit which is configured to receive a path switching request from the eNodeB based on the measurement report. The request message sending component may further include: a second sending unit which is configured to send the bearer processing request message to the MME through the eNodeB after the receiving unit receives the path switching request.

As seen from what described above, the embodiments of the present invention implement switching from the D2D path to the CN path or from the CN path to the D2D path for service transmission, so that the continuity of the data service is guaranteed during the path switching, and the path switching quality and the service experience of the user are improved.

Obviously, those skilled in the art shall understand that the components or steps of the present invention may be implemented by general computing apparatus and centralized in a single computing apparatus or distributed in a network consisting of multiple computing apparatus. Optionally, the components or steps may be implemented by program codes executable by the computing apparatus, so that they may be stored in a storage apparatus and executed by the computing apparatus, and, in some cases, the steps can be executed in a sequence different from the illustrated or described sequence, or they are respectively made into the integrated circuit components or many of them are made into a single integrated circuit component. Thereby, the embodiments of the present invention are not limited to any specific combination of hardware and software.

The above are only preferred embodiments of the present invention and not intended to limit the present invention. For those skilled in the art, various modifications and changes can be made in the present invention. Any modifications, equivalent replacements, improvements and the like within the spirit and principle of the present invention shall fall within the scope of protection of the present invention.

### Industrial Applicability

The technical solution of the embodiments of the present invention may be applied to the field of communications, and the problem that the continuity of a data service cannot be guaranteed during path switching in the related art is solved, so that the continuity of the data service is guaranteed during path switching, and the path switching quality and the service experience of the user are improved.

## Claims

1. A method for switching a communication path, **characterized by** comprising:
receiving, by a Mobility Management Entity (MME), a request message, wherein the request message is used for requesting for a communication in a Device to Device (D2D) path; and
sending, by the MME, at least one bearer resource processing request message to a Gateway (GW), wherein the bearer resource processing request message is used for notifying that a data path on a network side for transmitting data is switched from a Core Network (CN) path to the D2D path.

2. The method according to claim 1, **characterized in that** receiving, by the MME, the request message comprising:
receiving, by the MME, the request message from an eNodeB; or, receiving, by the MME, at least one of bearer processing request from at least one of two pieces of User Equipment (UE) through the eNodeB, wherein the two pieces of UE have performed a D2D communication negotiation.

3. The method according to claim 2, **characterized in that** before the MME receives the request message from the eNodeB, the method further comprises:
receiving, by the eNodeB, at least one verification request from the at least one of the two pieces of UE, the at least one verification request carrying at least one identifier of the at least one of the two pieces of UE; and
the eNodeB associating contexts of the two pieces of UE according to context information of the two pieces of UE which is stored on the eNodeB locally, and verifying the two pieces of UE according to the associated contexts.

4. The method according to claim 2, **characterized in that** before the MME receives the request message from the eNodeB, the method further comprises:
receiving, by the eNodeB, at least one verification request from the at least one of the two pieces of UE, the at least one verification request carrying at least one of identifier of the UE;
receiving, by the MME, a verification request message from the eNodeB, the verification request message carrying the at least one identifier of the at least one of the two pieces of UE;
judging, by the MME, whether to allow a communication is performed between the two pieces of UE according to a local policy and/or subscription information of the at least one of the two pieces of UE; and
based on that a result is that the communication between the two pieces of UE is allowed, sending, by the MME, a verification request acknowledgement message to the eNodeB, the verification request acknowledgement message being used for indicating that the communication between the two pieces of UE is allowed.

5. The method according to claim 2, **characterized in that** before the MME receives the at least one bearer processing request from the at least one of the two pieces of UE, which have performed the D2D communication negotiation, through the eNodeB, the method further comprises:
receiving, by the eNodeB, the at least one communication request from the at least one of the two pieces of UE which have performed the D2D communication negotiation, the at least one communication request carrying resource information for D2D communication; and
allocating, by the eNodeB, resources to the two pieces of UE according to the at least one communication request.

6. The method according to claim 5, **characterized in that** after the eNodeB allocates resources to the two pieces of UE according to the communication request which is received by the eNodeB from one of the two pieces of UE, the method further comprises:
associating, by the eNodeB, the contexts of the two pieces of UE according to the identifier of the one of two pieces of UE carried in the communication request;
sending, by the eNodeB, a communication acknowledgement message carrying information of resources allocated to the one of the two pieces of UE to the one of the two pieces of UE which sends the communication request; and
sending, by the eNodeB, a communication notification message carrying information of resources allocated to the other of the two pieces of UE to the other of the two pieces of UE according to an association of the contexts of the two pieces of UE.

7. The method according to claim 5, **characterized in that** after the eNodeB allocates the resources to the two pieces of UE according to the communication requests which are received by the eNodeB from the two pieces of UE, the method may further comprise:
sending, by the eNodeB, a communication acknowledgement message which carries information of resources allocated to one of the two pieces of UE to the two pieces of UE respectively.

8. The method according to claim 5, **characterized in that** after the eNodeB allocates resources to the two pieces of UE according to the communication request respectively, the method further comprises:
interacting, by the two pieces of UE, information according to the resources allocated by the eNodeB.

9. The method according to claim 1, **characterized in that** after the MME sends the bearer resource processing request message to the GW, the method further comprises:
removing, by the GW, at least one bearer related to the CN path corresponding to at least one data flow transmitted in the D2D path; and
initiating, by the GW, bearer modification procedure or bearer deactivation procedure, the bearer modification procedure or the bearer deactivation procedure being used for removing the bearer related to the CN path corresponding to the at least one data flow transmitted in the D2D path.

10. The method according to claim 1, **characterized in that** after the MME sends the bearer resource processing request message to the GW, the method further comprises:
retaining, by the GW, at least one bearer related to the CN path corresponding to the at least one data flow transmitted in the D2D path; and
notifying, by the GW, the at least one of the two pieces of UE that data is allowed to be transmitted in the D2D path.

11. The method according to claim 1, **characterized in that** after the MME sends the bearer resource processing request message to the GW, the method further comprises:
notifying, by the GW, a charging gateway that the data of the two pieces of UE has been switched to the D2D path to be transmitted according to the bearer resource processing request message.

12. The method according to claim 2, **characterized in that** the request message or the bearer processing request contains data flow information which is to be switched to the D2D path and the at least one identifier of the at least one of the two pieces of UE.

13. The method according to any one of claims 1 to 12, **characterized in that** the bearer resource processing request message contains information for indicating that the data path on the network side for transmitting data is switched from the CN path to the D2D path.

14. A method for switching a communication path, **characterized by** comprising:
receiving, by an MME, a bearer processing request message, wherein the bearer processing request message is used for requesting for a communication in a CN path; and
sending, by the MME, a bearer resource processing request message to a GW, wherein the bearer resource processing request message is used for notifying that a data path on a network side is switched from a D2D path to the CN path.

15. The method according to claim 14, **characterized in that** receiving, by the MME, the bearer processing request message comprising:
receiving, by the MME, the bearer processing request message from a UE through an eNodeB; or,
receiving, by the MME, the bearer processing request message from the eNodeB.

16. The method according to claim 15, **characterized in that** before the MME receives the bearer processing request message from the UE through the eNodeB, the method may further comprise:
detecting, by the UE, a communication link;
and when it is detected that quality of the communication link is reduced to a threshold, sending the bearer processing request message through the eNodeB.

17. The method according to claim 15, **characterized in that** before the MME receives the bearer processing request message from the UE through the eNodeB, the method may further comprise:
by the eNodeB, receiving a measurement report from the UE and deciding whether the UE needs to perforn a path switch according to the measurement report;
when the result is that the UE needs to perform the path switch, sending, by the eNodeB, a path switching request to the UE; and
sending, by the UE, the bearer processing request message through the eNodeB after the UE receives the path switching request.

18. The method according to claim 15, **characterized in that** before the MME receives the bearer processing request message from the eNodeB, the method may further comprise:
by the eNodeB, receiving a measurement report from the UE and deciding whether the UE needs a path switch according to the measurement report;
when the result is that the UE needs the path switch, acquiring, by the eNodeB, data flow information transmitted in the D2D path according to context information of the UE; and
sending, by the eNodeB, the bearer processing request message according to the data flow information.

19. The method according to claim 14, **characterized in that** after the MME sends the bearer resource processing request message to the GW, the method may further comprise:
re-activating, by the GW, at least one bearer related to the CN path for the data transmitted in the D2D path; and
initiating, by the GW, bearer modification procedure or bearer deactivation procedure, the bearer modification procedure or the bearer deactivation procedure being used for re-activating at least one bearer related to the CN path for the data transmitted in the D2D path.

20. The method according to claim 19, **characterized in that** re-activating, by the GW, the at least one bearer related to the CN path for the data transmitted in the D2D path comprises:
restoring, by the GW, the at least one bearer related to the CN path for the data transmitted in the D2D path; and
notifying, by the GW, the UE that the data is allowed to be transmitted in the CN path.

21. The method according to claim 14, **characterized in that** after the MME sends the bearer resource processing request message to the GW, the method may further comprise:
notifying, by the GW, a charging gateway that the data of the UE has been switched to the CN path according to the bearer resource processing request message.

22. The method according to any one of claims 14 to 21, **characterized in that** the bearer resource processing request message contains information for indicating that the data path on the network side is switched from the D2D path to the CN path to be transmitted.

23. A system for switching a communication path, **characterized by** comprising a Mobility Management Entity (MME), a eNodeB and a Gateway (GW), wherein the MME comprises:
a message receiving component configured to receive a request message, the request message being used for requesting for a communication in a D2D path; and
a message sending component configured to send at least one bearer resource processing request message to the GW, the bearer resource processing request message being used for notifying that a data path on a network side is switched from a CN path to the D2D path to be transmitted.

24. The system according to claim 23, **characterized in that** the message receiving component comprises:
a first receiving unit configured to receive the request message from the eNodeB, or,
a second receiving unit configured to receive at least one bearer processing request from at least one of the two pieces of UE which have performed a D2D communication negotiation through the eNodeB.

25. The system according to claim 24, **characterized in that** the eNodeB comprises:
a verification request receiving component configured to receive at least one verification request from the at least one of the two pieces of UE, the at least one verification request carrying at least one identifier of the at least one of two pieces of UE; and
a verification component configured to associate contexts of the two pieces of UE according to context information of the two pieces of UE stored locally and verify the two pieces of UE according to the associated contexts.

26. The system according to claim 24, **characterized in that**
the eNodeB further comprises a receiving component configured to receive the at least one verification request from the at least one of the two pieces of UE, the at least one verification request carrying at least one identifier of the at least one of the two pieces of UE; and;
the MME further comprises a receiving component configured to receive a verification request message from the eNodeB, the verification request message carrying the at least one identifier of the one of the two pieces of UE;
a judgement component configured to judge whether to allow the two pieces of UE to communicate with each other according to a local policy and/or subscription information of the at least one of the two pieces of UE; and
an indication component which is configured to send a verification request acknowledgement message to the eNodeB if the result is that the communication between the two pieces of UE is allowed, the verification request acknowledgement message being used for indicating that the communication between the two pieces of UE is allowed.

27. The system according to claim 24, **characterized in that** the eNodeB further comprises:
a communication request receiving component configured to receive at least one communication request from at least one of the two pieces of UE which have performed a D2D communication negotiation, the communication request carrying resource information for D2D communication; and
a resource allocation component configured to allocate resources to the two pieces of UE according to the communication request.

28. The system according to claim 27, **characterized in that** when the eNodeB receives the communication request from one of the two pieces of UE, the eNodeB further comprises:
an association component configured to associate contexts of the two pieces of UE according to at least one identifier of the at least one of the two pieces of UE carried in the communication request;
a first sending component configured to send a communication acknowledgement message carrying information of resources allocated to one of the two pieces of UE to the one of the two pieces of UE which sends the communication request; and
a second sending component configured to send a communication notification message carrying information of resources allocated to the other of the two pieces of UE to the other of the two pieces of UE according to the association of the contexts of the two pieces of UE.

29. The system according to claim 27, **characterized in that** when the eNodeB receives communication requests from the two pieces of UE, the eNodeB further comprises:
an acknowledgement message sending component configured to send communication acknowledgement messages which carry the information of resources allocated to a corresponding UE to the two pieces of UE respectively.

30. The system according to claim 23, **characterized in that** the GW comprises:
a deletion component configured to remove at least one bearer related to the CN path corresponding to the data flow transmitted in the D2D path;
a flow initiating component configured to initiate bearer modification procedure or bearer deactivation procedure, the bearer modification procedure or the bearer deactivation procedure being used for removing at least one bearer related to the CN path corresponding to the data flow transmitted in the D2D path.

31. The system according to claim 23, **characterized in that** the GW further comprises:
at least one bearer retaining component configured to retain the at least one bearer related to the CN path corresponding to the data flow transmitted in the D2D path; and
a notification component configured to notify the at least one of the two pieces of UE that data is allowed to be transmitted in the D2D path.

32. The system according to claim 23, **characterized in that** the GW further comprises:
a switching notification component configured to notify a charging gateway that the data of the two pieces of UE has been switched to the D2D path according to the bearer resource processing request message.

33. A device for switching a communication path, **characterized by** comprising:
a communication request sending component configured to send a communication request to a eNodeB, wherein the communication request carries an identifier of a User Equipment (UE) and data flow information to be switched to a Device to Device (D2D) path; and
a resource modification request sending component configured to send a resource processing request to the Mobility Management Entity (MME) through the eNodeB, wherein the resource processing request carries information for indicating that a data path on the network side is switched from a Core Network (CN) path to the D2D path and the data flow information to be switched to the D2D path.

34. A system for switching a communication path, **characterized by** comprising a Mobility Management Entity (MME), a eNodeB and a Gateway (GW), wherein the MME comprises:
a message receiving component configured to receive at least one bearer processing request message, the bearer processing request message being used for requesting for a communication in a CN path, and
a message sending component configured to send at least one bearer resource processing request message to the GW, the bearer resource processing request message being used for notifying that a data path on a network side is switched from a D2D path to the CN path to be transmitted.

35. The system according to claim 34, **characterized in that** the message receiving component comprises:
a first receiving unit configured to receive the bearer processing request message from a piece of UE through the eNodeB, or,
a second receiving unit configured to receive the bearer processing request message from the eNodeB.

36. The system according to claim 35, **characterized in that** the eNodeB comprises:
a report acquisition component configured to receive a measurement report from the UE;
a judgement component configured to judge whether the UE needs a path switch according to the measurement report; and
a request sending component configured to send a path switching request to the UE when the result is the UE needs the path switch, the path switching request being used for indicating that the bearer processing request message is sent to the MME through the eNodeB.

37. The system according to claim 35, **characterized in that** the eNodeB further comprises:
an information acquisition component configured to acquire data flow information of the D2D path according to context information of the UE; and
a message sending component configured to send the bearer processing request message according to the data flow information.

38. The system according to claim 34, **characterized in that** the GW comprises:
at least one bearer re-activation component configured to re-activate at least one bearer related to the CN path for the data transmitted in the D2D path; and
a flow initiating component configured to initiate at least one bearer modification procedure or bearer deactivation procedure, the bearer modification procedure or the bearer deactivation procedure being used for re-activating the bearer related to the CN path for the data transmitted in the D2D path.

39. The system according to claim 38, **characterized in that** the bearer re-activation component comprises:
at least one bearer restoration unit configured to restore the bearer related to the CN path for the data transmitted in the D2D path; and
a notification unit configured to notify the UE that data is allowed to be transmitted in the CN path.

40. The system according to claim 34, **characterized in that** the GW further comprises:
a switching notification component configured to notify a charging gateway that the data of the two pieces of UE has been switched to the CN path according to the bearer resource processing request message.

41. A device for switching a communication path, **characterized by** comprising:
a determination component configured to determine that a data path on a network side needs to be switched from a D2D path to a CN path to be transmitted, and
a request message sending component configured to send at least one bearer processing request message to the Mobility Management Entity (MME) through the eNodeB, wherein the bearer processing request message is used for requesting for a communication in the CN path.

42. The device according to claim 41, **characterized in that**
the determination component comprises a link detection unit configured to detect a communication link; and
the request message sending component comprises a first sending unit configured to send the bearer processing request message to the MME through the eNodeB when the link detection unit detects that quality of the communication link is reduced to a threshold.

43. The device according to claim 41, **characterized in that**
the determination component further comprises a reporting unit configured to send a measurement report to the eNodeB; and
a receiving unit configured to receive a path switching request from the eNodeB based on the measurement report.

44. The device according to claim 43, **characterized in that**
the request message sending component may further comprise: a second sending unit configured to send the bearer processing request message to the MME through the eNodeB after the receiving unit receives the path switching request.
